(19) Europäisches Patentamt
European Patent Office
Office européen des brevets

(11) Veröffentlichungsnummer: **0 074 924**
**A1**

(12) # EUROPÄISCHE PATENTANMELDUNG

(21) Anmeldenummer: **82810371.3**

(22) Anmeldetag: **06.09.82**

(51) Int. Cl.³: **C 09 B 57/04**
C 09 B 26/02, C 07 D 401/12
C 08 K 5/34

(30) Priorität: **11.09.81 CH 5897/81**

(43) Veröffentlichungstag der Anmeldung:
**23.03.83 Patentblatt 83/12**

(84) Benannte Vertragsstaaten:
**CH DE FR GB IT LI**

(71) Anmelder: **CIBA-GEIGY AG**
**Patentabteilung Postfach**
**CH-4002 Basel(CH)**

(72) Erfinder: **Felix, Franz, Dr.**
**Dürrenmattweg 83**
**CH-4123 Allschwil(CH)**

(72) Erfinder: **Lienhard, Paul, Dr.**
**Kirschgartenstrasse 14**
**CH-4402 Frenkendorf(CH)**

(54) **Nickelkomplexpigmente von Azinen.**

(57) 1:1-Nickelkomplexe von Azinen der Formel I oder einer dazu tautomerer Form

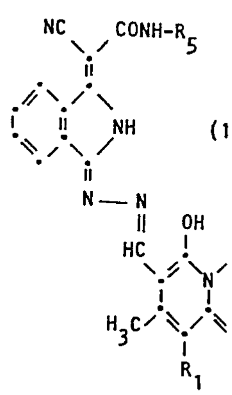

(I)

worin $R_1$ Wasserstoff, Cyano oder Carbamoyl, und $R_2$ Wasserstoff, Alkyl oder eine Gruppe der Formel II bedeuten

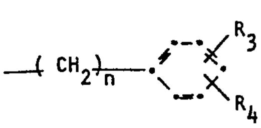

(II),

worin n Null oder l ist, $R_3$ and $R_4$ unabhängig voneinander Wasserstoff, Halogen, Alkyl oder –O–Alkyl bedeuten, und $R_5$ eine Gruppe der Formel II mit n gleich 1, oder eine Gruppe der Formel III bedeutet

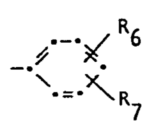

(III),

worin $R_6$ und $R_7$ unabhängig voneinander Wasserstoff, Halogen, Alkyl, Nitro, Trifluormethyl, $R_8O-$, $R_8OCO-$, $R_8CONH-$, $R_9NHCO-$ oder $R_9NHSO_2-$ bedeuten, wobei $R_8$ und $R_9$ Alkyl oder unsubstituiertes oder mit Halogen, Alkyl oder –O–Alkyl einfach substituiertes Phenyl bedeuten, und $R_9$ zusätzlich Wasserstoff ist.

Diese Komplexe eignen sich als hochwertige Pigmente zum Pigmentieren von hochmolekularem organischem Material. Sie zeichnen sich insbesondere durch hohe Licht-, Migrations- und Wetterechtheit aus.



Croydon Printing Company Ltd.

CIBA-GEIGY AG
Basel (Schweiz)

3-13548/+

# Nickelkomplexpigmente von Azinen

In der GB-PS 1.467.595 sind Metallkomplexe von Azinen der Formel

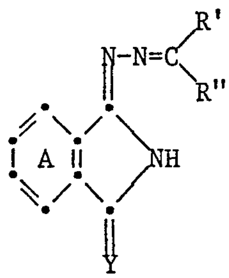

beschrieben, worin R' ein H-Atom, eine Alkyl- oder Arylgruppe, R" einen isocyclischen oder heterocyclischen Rest mit einer zur Azomethingruppe benachbarten Hydroxy- oder Mercaptogruppe, Y den Rest einer methylenaktiven Verbindung, eines Aryl- oder Heteroarylamins bedeutet, und der Ring A nicht wasserlöslichmachende Substituenten aufweisen kann. Diese Metallkomplexe ergeben jedoch in Kunststoffen und Lacken Färbungen von unbefriedigender Reinheit und ungenügenden Echtheiten.

Die Erfindung betrifft neue und wertvolle 1:1-Nickelkomplexe von Azinen der Formel I oder einer dazu tautomeren Form

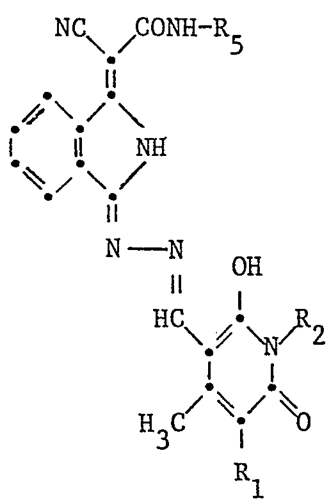

(I)

worin $R_1$ Wasserstoff, Cyano oder Carbamoyl, und $R_2$ Wasserstoff, Alkyl oder eine Gruppe der Formel II bedeuten

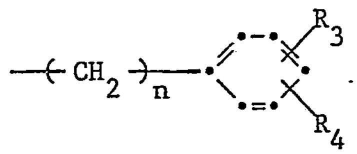

(II),

worin n Null oder 1 ist, $R_3$ und $R_4$ unabhängig voneinander Wasserstoff, Halogen, Alkyl oder -O-Alkyl bedeuten, und $R_5$ eine Gruppe der Formel II mit n gleich 1, oder eine Gruppe der Formel III bedeutet

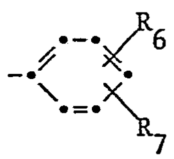

(III),

worin $R_6$ und $R_7$ unabhängig voneinander Wasserstoff, Halogen, Alkyl, Nitro, Trifluormethyl, $R_8O$-, $R_8OCO$-, $R_8CONH$-, $R_9NHCO$- oder $R_9NHSO_2$- bedeuten, wobei $R_8$ und $R_9$ Alkyl oder unsubstituiertes oder mit Halogen, Alkyl oder -O-Alkyl substituiertes Phenyl bedeuten, und $R_9$ zusätzlich Wasserstoff ist.

Alkyl in den Definitionen von $R_2$ bis $R_9$ kann geradkettig oder verzweigt sein und insbesondere 1 bis 12 C-Atome enthalten, wie beispielsweise Methyl, Aethyl, Isopropyl, sec.-Butyl, tert.-Butyl, tert.-Amyl, Hexyl, 1,1,3,3-Tetramethylbutyl, Octyl, Nonyl, Decyl, Undecyl oder Dodecyl.

Bevorzugte Verbindungen entsprechen der Formel I, worin Alkyl in den Definitionen von $R_2$ bis $R_4$ und $R_6$ bis $R_9$ insbesondere 1 bis 4 C-Atome, vor allem 1 C-Atom, enthält.

Halogen kann in den Definitionen von $R_3$, $R_4$, $R_6$, $R_7$, $R_8$ und $R_9$ zum Beispiel Fluor, Chlor oder Brom bedeuten. Vorzugsweise bedeutet Halogen Chlor.

Die bevorzugte Bedeutung von $R_1$ ist insbesondere Cyano oder Carbamoyl, vor allem Cyano.

Bedeuten $R_2$ und $R_5$ eine Gruppe der Formel II, so kann es sich beispielsweise um 4-Methylbenzyl, 4-Chlorbenzyl, 4-Methoxybenzyl, 2,4-Dichlorbenzyl, 3,4-Dichlorbenzyl, Benzyl, 2,3-Dichlorphenyl, 2-Methyl-4-chlorphenyl, 2-Methoxy-5-chlorphenyl und Phenyl handeln.

Bevorzugte Bedeutungen von $R_2$ sind insbesondere Methyl, Aethyl, Benzyl oder Phenyl, vor allem Phenyl oder Methyl.

Bevorzugte Bedeutung von $R_5$ ist insbesondere eine Gruppe der Formel II mit n gleich 1, vor allem aber eine Gruppe der Formel III.

In der Gruppe der Formel III ist vorzugsweise mindestens einer der Substituenten $R_6$ und $R_7$ verschieden von Wasserstoff. Bevorzugte Substituenten können insbesondere Chlor, Methyl, Nitro, Trifluormethyl, -O-Methyl, -O-Phenyl, Carbamoyl, Sulfamoyl, Methylcarbamoyl, Acetylamino oder Benzoylamino sein.

Beispiele für Gruppen der Formel III sind 2-Chlorphenyl, 2,3-Dichlorphenyl, 3,4-Dichlorphenyl, 3,5-Dichlorphenyl, 2,4-Dichlorphenyl, 2-Methyl-4-nitrophenyl, 2-Methoxy-5-chlorphenyl, 2-Chlor-5-trifluormethylphenyl, 4-Chlor-3-carbamoylphenyl, 2-Chlor-5-phenylcarbamoylphenyl, 2-Chlor-5-p-chlorphenyl-carbamoylphenyl und 2-Methoxy-5-p-methylphenylcarbamoylphenyl.

Bedeuten $R_8$ und $R_9$ substituiertes Phenyl, so kann es sich beispielsweise um 4-Methylphenyl, 4-Chlorphenyl, 4-Aethylphenyl oder 4-Methoxyphenyl handeln.

Somit entsprechen bevorzugte Verbindungen der Formel I, worin $R_1$ Wasserstoff oder Cyano, und $R_2$ Wasserstoff, Methyl, Aethyl oder eine Gruppe der Formel II bedeuten, worin n Null oder 1 ist, $R_3$ und $R_4$ unabhängig voneinander Wasserstoff, Chlor, Methyl oder -O-Methyl sind, und $R_5$ eine Gruppe der Formel II, worin n 1 ist und $R_3$ und $R_4$ die oben angegebene Bedeutung haben, oder eine Gruppe der Formel III bedeutet, worin $R_6$ und $R_7$ unabhängig voneinander Wasserstoff, Chlor, Methyl, Nitro, Trifluormethyl, $R_8O$-, $R_8CONH$-, $R_9NHCO$- oder $R_9NHSO_2$- bedeuten, wobei $R_8$ und $R_9$ Methyl oder Phenyl bedeuten, und $R_9$ zusätzlich Wasserstoff ist.

Besonders bevorzugte Verbindungen entsprechen der Formel I, worin $R_1$ Wasserstoff oder Cyano, und $R_2$ Wasserstoff, Methyl, Aethyl oder eine Gruppe der Formel II bedeuten, worin n Null oder 1 ist, $R_3$ und $R_4$ unabhängig voneinander Wasserstoff, Chlor, Methyl oder -O-Methyl sind, und $R_5$ eine Gruppe der Formel III bedeutet, worin $R_6$ und $R_7$ unabhängig voneinander Wasserstoff, Chlor, Methyl, Nitro, -O-Methyl, -O-Phenyl, Carbamoyl, Sulfamoyl, Acetylamino oder Benzoylamino bedeuten.

Weitere bevorzugte Verbindungen entsprechen der Formel I, worin $R_1$ Wasserstoff oder Cyano, $R_2$ Methyl, Wasserstoff oder eine Gruppe der Formel II bedeuten, worin n Null oder 1 ist, $R_3$ und $R_4$ unabhängig voneinander Wasserstoff, Chlor, Methyl oder -O-Methyl sind, und $R_5$ eine Gruppe der Formel III bedeutet, worin $R_6$ Wasserstoff oder Chlor, und $R_7$ Chlor, Methyl, -O-Methyl, Nitro oder Sulfamoyl bedeuten.

Von besonderem Interesse sind Verbindungen der Formel I, worin $R_1$ Wasserstoff oder Cyano, insbesondere Cyano, $R_2$ Wasserstoff oder Methyl, insbesondere Methyl, und $R_5$ eine Gruppe der Formel III bedeuten, worin $R_6$ Wasserstoff und $R_7$ Chlor oder -O-Methyl, insbesondere Chlor bedeuten.

Die 1:1 Nickelkomplexe der Azine der Formel I erhält man nach an sich bekannten Verfahren, indem man ein Hydrazono-isoindolin der Formel IV

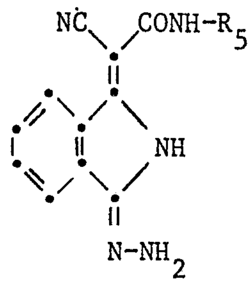

(IV)

worin $R_5$ die oben angegebene Bedeutung hat, mit einem Aldehyd der Formel V

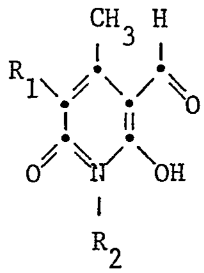

(V)

oder einem Aldimin der Formel VI

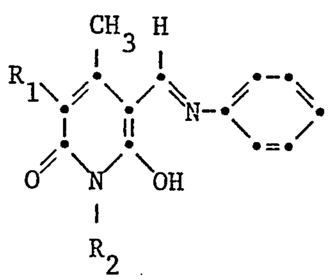

(VI)

worin $R_1$ und $R_2$ die oben angegebenen Bedeutungen haben, kondensiert und während oder nach der Kondensation ein nickelabgebendes Mittel zusetzt.

Als nickelabgebende Mittel eignen sich insbesondere Nickel-Formiat, Nickel-Stearat, vor allem Nickel-Acetat und Nickel-Acetylacetonat.

Die Umsetzung erfolgt vorzugsweise bei Temperaturen zwischen 50 und 130°C in einem organischen Lösungsmittel. Es können auch Mischungen von Lösungsmitteln verwendet werden, gegebenenfalls auch mit Wasser.

Als organische Lösungsmittel eignen sich insbesondere Aethanol, Essigsäure, Dioxan, Dimethylformamid, N-Methylpyrrolidon, Butyrolakton, Glykolmonomethyläther oder Glykolmonoäthyläther.

Die Nickelkomplexe der Azine der Formel I lassen sich leicht durch Filtration isolieren. Allfällige Verunreinigungen können durch Auswaschen entfernt werden.

Die Verbindungen der Formeln IV bis VI können ebenfalls nach bekannten Verfahren hergestellt werden.

Die neuen Pigmente eignen sich zum Pigmentieren von hochmolekularen organischen Materialien, z.B. Celluloseäthern und -estern, wie Aethylcellulose, Nitrocellulose, Celluloseacetat, Cellulosebutyrat, natürlichen Harzen oder Kunstharzen, wie Polymerisationsharzen oder Kondensationsharzen, z.B. Aminoplasten, insbesondere Harnstoff- und Melamin-Formaldehydharzen, Alkydharzen, Phenoplasten, Polycarbonaten, Polyolefinen, wie Polystyrol, Polyvinylchlorid, Polyäthylen, Polypropylen, Polyacrylnitril, Polyacrylsäureester, Polyamiden, Polyurethanen oder Polyester, Gummi, Casein, Silikon und Silikonharzen, einzeln oder in Mischungen.

Dabei spielt es keine Rolle, ob die erwähnten hochmolekularen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die neuen Pigmente als Toner oder in Form von Präparaten zu verwenden.

Die Pigmente können in der Form, wie sie in der Synthese anfallen, eingesetzt werden. In leicht gemahlener Form liefern sie opake Ausfärbungen. Man kann sie aber auch einer intensiveren Mahlung unterziehen und erhält dann transparente Ausfärbungen, wie beispielsweise farbstarke Metalleffektlackierungen.

Die Pigmente zeichnen sich in Lacken durch ein günstiges Fliessverhalten aus. Die fertigen Lackierungen weisen einen guten Glanz auf.

Werden die neuen Pigmente in Kunststoffe oder Synthsefasern eingearbeitet, so stabilisieren sie diese gegen die Einflüsse von Licht und Wetter. Aus den gefärbten Kunststoffen und Synthesefasern hergestellte Gegenstände zeichnen sich durch eine längere Gebrauchsdauer aus.

Werden die neuen Pigmente in lichtstabilisiertes hochmolekulares organisches Material eingearbeitet, wird in der Regel dessen Lichtstabilität nicht beeinträchtigt. Gegebenenfalls lässt sich auch eine synergistische Verbesserung der Lichtstabilität beobachten.

Die erhaltenen Färbungen zeichnen sich durch gute allgemeine Pigmenteigenschaften, insbesondere durch ausgezeichnete Licht-, Hitze-, Wetter-, Ueberlackier- und Migrationsechtheit und durch für Metallkomplexe unerwartet hohe Brillanz des Farbtons, hohe Farbstärke und gute Dispergierbarkeit aus. Die Pigmente beeinflussen die machanischen Eigenschaften der Substrate wenig, insbesondere fördern sie die Verzugseigenschaften von Kunststoffteilen nicht. Pigmentierte Fasern zeigen allgemein ein hohes Echtheitsniveau.

Die folgenden Beispiele erläutern die Erfindung. Nur eine der möglichen isomeren Formeln ist jeweils angegeben. Teile sind Gewichtsteile.

Beispiel 1: 16,45 g 1-Phenyl-2-hydroxy-3-anilinomethylen-4-methyl-5-cyano-pyridon-6, 15,85 g 1-(Cyano-p-methyl-phenylcarbamoyl-methylen)-3-hydrazonoisoindolin und 13,5 g Nickelacetat $\cdot 4H_2O$ werden in 300 ml Dimethylformamid während 3 Stunden bei 120°C gerührt. Man filtriert bei 80°C und wäscht den Filterrückstand mit Dimethylformamid und Aethanol. Nach dem Trocknen im Vakuum bei 60°C erhält man 19,8 g eines roten Pigmentes der Formel

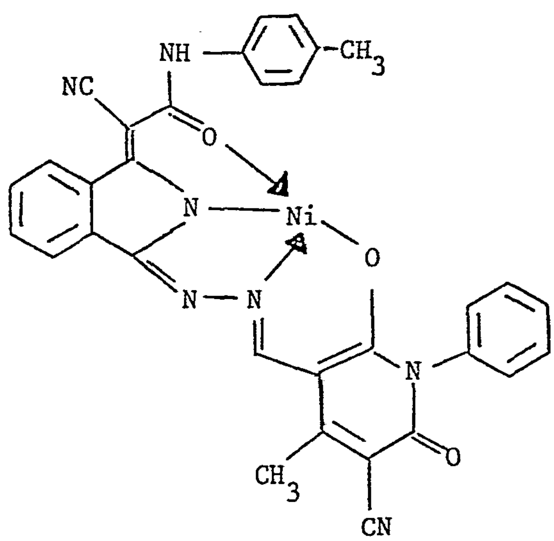

Mikroanalyse:

| | C | H | N | Ni |
|---|---|---|---|---|
| Berechnet % | 62,9 | 16,1 | 3,9 | 9,6 |
| Gefunden % | 62,6 | 16,5 | 3,5 | 9,9 |

Beispiel 2: 26,7 g 1-Methyl-2-hydroxy-3-anilinomethylen-4-methyl-5-cyano-pyridon-6 werden mit 33,7 g 1-(Cyano-m-chlor-phenylcarbamoyl-methylen)-3-hydrazono-isoindolin in 400 ml Dimethylformamid während 90 Minuten bei 100°C gerührt. Dann gibt man 27 g Nickelacetat•$4H_2O$ zu und rührt 3 Stunden bei 120°C. Man filtriert bei 70°C und wäscht den Filterrückstand mit Dimethylformamid und Aceton. Nach dem Trocknen im Vacuum bei 60°C erhält man 38 g eines roten Pigmentes der Formel

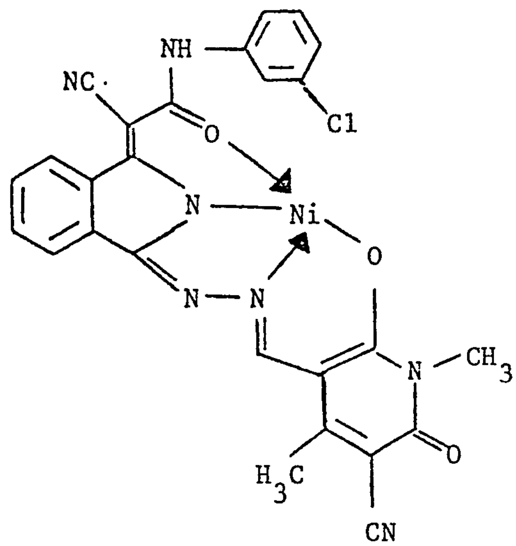

Mikroanalyse:

| | C | H | N | Cl | Ni |
|---|---|---|---|---|---|
| Berechnet % | 55,4 | 2,8 | 16,8 | 6,1 | 10.0 |
| Gefunden % | 55,2 | 3,0 | 17,3 | 6,1 | 10,2 |

Beispiel 3: 17,8 g 2,6-Dihydroxy-3-formyl-4-methyl-5-cyanopyridin werden mit 33,4 g 1-(Cyano-m-methoxy-phenylcarbamoylmethylen)-3-hydrazono-isoindolin in 350 ml Dimethylformamid während 1 Stunde bei 100°C gerührt. Dann gibt man 27,5 g Nickel-Acetat$\cdot$4$H_2O$ zu und rührt die Suspension während 3 Stunden bei 120°C. Man filtriert bei 80°C und wäscht den Filterrückstand mit Dimethylformamid und Aethanol. Nach dem Trocknen im Vakuum bei 80°C erhält man 42 g eines roten Pigmentes der Formel

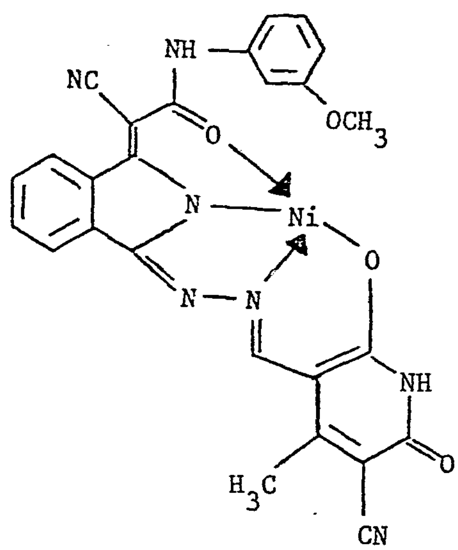

Mikroanalyse:

| | C | H | N | Ni |
|---|---|---|---|---|
| Berechnet % | 56,5 | 3,5 | 17,8 | 10,6 |
| Gefunden % | 56,3 | 3,3 | 18,1 | 10,5 |

Beispiele 4 bis 49: Analog zu den Beispielen 1 bis 3 erhält man weitere 1:1 Nickelkomplexe von Azinen der Formel I, indem man ein Hydrazono-isoindolin der Formel IV, worin $R_5$ eine Gruppe der Formel III bedeutet, mit einem Aldehyd der Formel V oder einem Aldimin der Formel VI umsetzt und Nickelacetat zufügt.

Aus der Tabelle 1 sind die Bedeutungen von $R_1$ und $R_2$ in den Formeln V und VI und von $R_6$ und $R_7$ in der Formel III ersichtlich. Ph bedeutet Phenyl, Bz bedeutet Benzyl.

Tabelle 1

| Nr. | $R_1$ | $R_2$ | $R_6$ | $R_7$ | Farbton |
|---|---|---|---|---|---|
| 4 | -CN | H- | H- | 2-$H_3$CO- | rot |
| 5 | -CN | H- | 3-Cl- | 5-Cl- | rot |
| 6 | -CN | H- | H- | 4-Cl- | orange |
| 7 | -CN | H- | 3-Cl- | 4-$H_3$C- | rot |
| 8 | -CN | H- | 3-$H_3$C- | 4-$H_3$C- | rot |
| 9 | -CN | H- | H- | 2-$H_3$C- | rot |
| 10 | -CN | H- | H- | 4-$NO_2$- | rot |
| 11 | -CN | H- | H- | 3-Cl- | orange |
| 12 | -CN | H- | H- | H- | orange |
| 13 | -CN | H- | H- | 3-$H_3$C- | orange |
| 14 | -CN | H- | H- | 4-$H_2NSO_2$- | rot |
| 15 | -H | H- | H- | 4-Cl- | bordeaux |
| 16 | -$CONH_2$ | H- | H- | 4-$H_3$C- | rot |
| 17 | -$CONH_2$ | H- | H- | 4-Cl- | rot |
| 18 | -CN | Ph- | H- | H- | rot |
| 19 | -CN | Ph- | H- | 2-$H_3$C- | rot |
| 20 | -CN | Ph- | H- | 3-$H_3$C- | rot |
| 21 | -CN | Ph- | H- | 4-Cl- | rot |
| 22 | -CN | Ph- | H- | 3-Cl- | rot |
| 23 | -CN | Ph- | H- | 4-$H_3$CO- | rot |
| 24 | -CN | Ph- | H- | 4-$H_3$COCNH- | rot |
| 25 | -CN | Ph- | H- | 4-$NO_2$- | rot |
| 26 | -CN | Ph- | 2-Cl- | 4-Cl- | orange-rot |
| 27 | -CN | 4-$H_3$CO-Ph- | H- | 4-Cl- | rot |
| 28 | -CN | 4-$H_3$CO-Ph- | H- | 4-$H_3$C- | rot |
| 29 | -CN | 4-$H_3$CO-Ph- | H- | 3-$H_3$CO- | rot |
| 30 | -CN | 4-Cl-Ph- | H- | 4-Cl- | rot |
| 31 | -CN | 4-Cl-Ph- | H- | 3-Cl- | rot |
| 32 | -CN | 4-Cl-Ph- | H- | 4-$NO_2$- | rot |

Tabelle 1 Fortsetzung

| Nr. | $R_1$ | $R_2$ | $R_6$ | $R_7$ | Farbton |
|---|---|---|---|---|---|
| 33 | -CN | $H_3C$- | H- | H- | rot |
| 34 | -CN | $H_3C$- | H- | 4-$H_3C$- | rot |
| 35 | -CN | $H_3C$- | H- | 4-Cl- | rot |
| 36 | -CN | $H_3C$- | H- | 4-$H_3CO$- | rot |
| 37 | -CN | $H_3C$- | H- | 3-$H_3C$- | rot |
| 38 | -CN | $H_3C$- | H- | 2-$H_3CO$- | rot |
| 39 | -CN | $H_3C$- | H- | 3-$H_3CO$- | rot |
| 40 | -CN | $H_3C$- | 3-Cl- | 4-Cl- | rot |
| 41 | -H | $H_3C$- | H- | 4-Cl- | bordeaux |
| 42 | -CN | $H_5C_2$- | H- | H- | rot |
| 43 | -CN | $H_5C_2$- | H- | 4-Cl- | rot |
| 44 | -CN | $H_5C_2$- | H- | 4-$H_3C$- | rot |
| 45 | -CN | $H_5C_2$- | H- | 4-$NO_2$- | rot |
| 46 | -CN | Bz | H- | 4-Cl- | rot |
| 47 | -CN | Bz | H- | 3-$H_3CO$- | rot |
| 48 | -CN | Bz | H- | 4-$H_3CO$- | rot |
| 49 | -CN | Bz | H- | 4-$H_3C$- | rot |

Beispiele 50 - 56: Analog zu den Beispielen 1 bis 3 erhält man weitere 1:1-Nickelkomplexe von Azinen der Formel I, indem man ein Hydrazonoisoindolin der Formel IV, worin $R_5$ eine Gruppe der Formel II mit n gleich 1 bedeutet, mit einem Aldehyd der Formel V oder einem Aldimin der Formel VI umsetzt und Nickelacetat zufügt.

Aus der Tabelle 2 sind die Bedeutungen von $R_1$ und $R_2$ in den Formeln V und VI und von $R_5$ in der Formel IV ersichtlich. Bz bedeutet Benzyl.

Tabelle 2:

| Nr. | $R_1$ | $R_2$ | $R_5$ | Farbton |
|---|---|---|---|---|
| 50 | -H | H- | Bz- | rot |
| 51 | -CN | H- | Bz- | orange |
| 52 | -H | $H_3C$- | 4-Cl-Bz | rot |
| 53 | -CN | $H_3C$- | Bz- | orange |
| 54 | -CN | $H_5C_2$- | Bz- | orange |
| 55 | -CN | H- | 4-Cl-Bz- | orange |
| 56 | -CN | H- | 4-$H_3$CO-Bz- | orange |

Beispiele 57 bis 66: Analog den Beispielen 1 bis 3 erhält man weitere 1:1-Nickelkomplexe von Azinen der Formel I, indem man ein Hydrazonoisoindolin der Formel IV, worin $R_5$ eine Gruppe der Formel III bedeutet, mit einem Aldehyd der Formel V oder einem Aldimin der Formel VI umsetzt und Nickelacetat zufügt.

Tabelle 3:

| Nr. | $R_1$ | $R_2$ | $R_6$ | $R_7$ | Farbton |
|---|---|---|---|---|---|
| 57 | -CN | $H_5C_2$ | H- | 2-$H_3$C- | rot |
| 58 | -CN | $H_5C_2$- | H- | 4-$H_3$CO- | rot |
| 59 | -CN | $H_5C_2$- | H- | 3-Cl | rot |
| 60 | -CN | $H_5C_2$ | H- | 4-PhOCNH- | rot |
| 61 | -CN | $H_3C$- | H- | 2-Cl- | rot |
| 62 | -CN | $H_3C$- | 3-Cl | 4-$H_3$C- | rot |
| 63 | -CN | $H_3C$- | H- | 4-$O_2$N- | rot |
| 64 | -CN | 4-$H_3$CO-Ph- | H- | H- | rot |
| 65 | -CN | H- | H- | 4-$H_3$CO- | rot |
| 66 | -CN | H- | H- | 4-PhOCNH- | rot |

Beispiel 67: In einem Laboratoriums-Kneter von 250 Vol.-Teilen Inhalt legt man 25 Teile des gemäss Beispiel 14 hergestellten Pigments, 100 Teile feingemahlenes Natriumchlorid und 30 Teile Diacetonalkohol vor. Man knetet die Mischung während 5 Stunden unter Kühlung und trägt sie dann in 4000 Vol.-Teile Wasser ein. Natriumchlorid sowie Diacetonalkohol gehen in Lösung, das Pigment fällt aus. Man filtriert die Suspension, wäscht das Nutschgut gründlich mit Wasser und trocknet es im Vakuumtrockenschrank bei 80° C.

Beispiel 68: 65 Teile stabilisiertes Polyvinylchlorid, 35 Teile Dioctylphthalat und 0,2 Teile des gemäss Beispiel 67 erhaltenen Pigmentes werden miteinander verrührt und dann auf einem Zweiwalzenkalander während 7 Minuten bei 160°C hin- und hergewalzt. Man erhält eine rot gefärbte Folie von sehr guter Licht- und Migrationsechtheit.

Beispiel 69: 10 g Titandioxyd und 2 g des nach Beispiel 26 hergestellen Pigments werden mit 88 g einer Mischung von 26,4 g Kokosalkydharz, 24,0 g Melamin-Formaldehydharz (50% Festkörpergehalt), 8,8 g Aethylenglykolmonomethyläther und 28,8 g Xylol während 48 Stunden im einer Kugelmühle vermahlen. Wird dieser Lack auf eine Aluminiumfolie gespritzt, 30 Minuten bei Raumtemperatur vorgetrocknet und dann während 30 Minuten bei 120°C eingebrannt, dann erhält man eine orange-rote Lackierung, die sich bei guter Farbstärke durch eine sehr gute Ueberlackier-, Licht- und Wetterechtheit auszeichnet.

Beispiel 70: 4 Teile des fein verteilten Pigments gemäss Beispiel 67 werden in 20 Teilen Lösungsmittel der folgenden Zusammensetzung eingerührt: 50 Teile Solvesso 150® (Gemisch aromatischer Kohlenwasserstoffe), 15 Teile Butylacetat, 5 Teile Exkin II® (Verlaufmittel auf Ketoximbasis), 25 Teile Methyl-isobutylketon, 5 Teile Silikonöl (1% in Solvesso 150®). Wenn die vollständige Feinverteilung erreicht ist (je nach Art des Rührens in ca. 15-60 Minuten), werden die Bindemittel

zugesetzt, nämlich 48,3 Teile Baycryl L 530® (Acrylharz) (51% in Xylol/Butanol 3:1) und 23,7 Teile Maprenal TTX® (Melaminharz) (55% in Butanol). Nach kurzem Homogenisieren wird der Lack nach üblichen Methoden wie Spritzen und Tauchen oder speziell zur kontinuierlichen Beschichtung von Metallblechen im "Coil-Coating"-Verfahren appliziert und eingebrannt (Einbrennen 30 Minuten, 130°C). Die erhaltenen roten Lackierungen zeichnen sich aus durch sehr guten Verlauf, hohen Glanz und ausgezeichnete Feinverteilung des Pigmentes, sowie durch ausgezeichnete Wetterechtheiten.

Normalvalenzen der Pigmente aus den Beispielen 1 bis 66

a) 1 g Pigment, 1 g eines Glycerinharzesters von polymerisiertem Kolophonium Dertopoline G®, 20 g Kochsalz und 10 ml Diäthylenglykoldimethyläther werden mit einem Scheibenrührer 2 Stunden intensiv gerührt. Danach wird die Mischung in Wasser ausgetragen, bis zur gleichmässigen Verteilung gerührt, der Festkörper abfiltriert, gründlich mit Wasser gewaschen und bei 60° im Vakuum getrocknet. Das so hergestellte Präparat enthält 50 % Pigment.

b) Aus 65 Teilen stabilisiertem Polyvinylchlorid, 35 Teilen Dioctylphthalat und 0,4 Teilen Pigmentpräparat 50%ig wird auf dem heissen Zweiwalzenkalander eine Folie hergestellt.

c) An der gefärbten Folie wird die Remission inklusive Glanz über weisser Unterlage für die Normlichtart D 65 und den 10°-Beobachter gemessen. Entsprechend dem CIE-System erfolgt die Berechnung der Normalvalenzen (Tristimulus values) X, Y, Z, die in Tabelle 4 aufgeführt sind.

(Literatur: Kirk-Othmer, Encyclopedia of Chem. Technology, 3. Auflage, Vol. 6, S. 535 (J. Wiley, 1979)).

Tabelle 4

| Beispiel Nr. | X | Y | Z |
|---|---|---|---|
| 1 | 26,97 | 16,88 | 5,10 |
| 2 | 30,82 | 19,37 | 6,48 |
| 3 | 25,88 | 16,09 | 6,68 |
| 4 | 32,90 | 20,48 | 5,67 |
| 5 | 29,98 | 19,32 | 6,09 |
| 6 | 46,18 | 33,08 | 5,16 |
| 7 | 29,47 | 17,86 | 5,61 |
| 8 | 32,67 | 20,63 | 6,63 |
| 9 | 33,63 | 20,77 | 4,84 |
| 10 | 32,09 | 21,18 | 7,98 |
| 11 | 42,05 | 29,81 | 6,39 |
| 12 | 45,41 | 30,67 | 5,29 |
| 13 | 44,71 | 30,71 | 6,09 |
| 14 | 37,01 | 23,52 | 5,05 |
| 15 | 14,51 | 10,45 | 6,33 |
| 16 | 27,31 | 17,34 | 6,49 |
| 17 | 29,22 | 18,26 | 4,99 |
| 18 | 25,32 | 16,63 | 5,05 |
| 19 | 32,60 | 20,49 | 5,49 |
| 20 | 29,05 | 17,64 | 5,27 |
| 21 | 34,19 | 21,98 | 5,38 |
| 22 | 32,40 | 20,52 | 5,62 |
| 23 | 19,39 | 11,77 | 4,90 |
| 24 | 23,56 | 14,29 | 5,20 |
| 25 | 30,30 | 19,03 | 5,68 |
| 26 | 38,54 | 25,08 | 5,05 |
| 27 | 33,94 | 31,32 | 5,39 |
| 28 | 33,33 | 20,64 | 5,43 |
| 33 | 34,21 | 21,34 | 5,36 |

Tabelle 4: (Fortsetzung)

| Beispiel Nr. | X | Y | Z |
|---|---|---|---|
| 34 | 36,61 | 23,02 | 5,66 |
| 35 | 30,47 | 18,19 | 4,55 |
| 36 | 29,97 | 18,61 | 5,92 |
| 38 | 31,94 | 19,74 | 5,49 |
| 39 | 28,87 | 18,42 | 6,35 |
| 40 | 36,32 | 23,17 | 5,29 |
| 41 | 12,81 | 9,25 | 6,17 |
| 42 | 20,99 | 13,21 | 6,18 |
| 43 | 31,00 | 19,34 | 5,55 |
| 44 | 30,10 | 19,56 | 6,22 |
| 45 | 37,36 | 24,69 | 6,01 |
| 46 | 36,22 | 22,49 | 5,20 |
| 47 | 33,65 | 21,17 | 5,65 |
| 48 | 26,70 | 15,87 | 5,18 |
| 49 | 33,98 | 20,68 | 4,59 |
| 53 | 34,01 | 22,17 | 6,15 |
| 57 | 29,47 | 18,78 | 5,06 |
| 58 | 33,11 | 21,16 | 6,26 |
| 59 | 33,23 | 20,46 | 4,89 |
| 60 | 19,18 | 11,97 | 5,43 |
| 61 | 26,45 | 16,45 | 5,93 |
| 62 | 30,50 | 18,51 | 4,86 |
| 63 | 34,08 | 21,45 | 4,94 |
| 64 | 35,97 | 22,70 | 4,84 |
| 65 | 35,56 | 22,94 | 6,48 |
| 66 | 22,19 | 14,26 | 6,11 |

Patentansprüche

1. 1:1-Nickelkomplexe von Azinen der Formel I oder einer dazu tautomerer Form

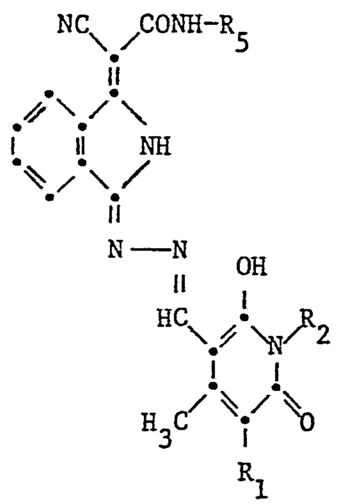

(I)

worin $R_1$ Wasserstoff, Cyano oder Carbamoyl, und $R_2$ Wasserstoff, Alkyl oder eine Gruppe der Formel II bedeuten

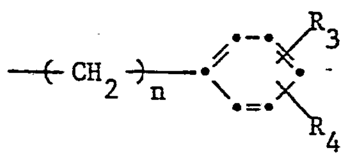

(II),

worin n Null oder 1 ist, $R_3$ und $R_4$ unabhängig voneinander Wasserstoff, Halogen, Alkyl oder -O-Alkyl bedeuten, und $R_5$ eine Gruppe der Formel II mit n gleich 1, oder eine Gruppe der Formel III bedeutet

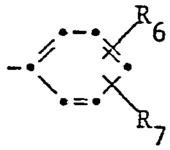

(III),

worin $R_6$ und $R_7$ unabhängig voneinander Wasserstoff, Halogen, Alkyl, Nitro, Trifluormethyl, $R_8O$-, $R_8OCO$-, $R_8CONH$-, $R_9NHCO$- oder $R_9NHSO_2$- bedeuten, wobei $R_8$ und $R_9$ Alkyl oder unsubstituiertes oder mit Halogen, Alkyl oder -O-Alkyl einfach substituiertes Phenyl bedeuten, und $R_9$ zusätzlich Wasserstoff ist.

2. 1:1-Nickelkomplexe von Azinen gemäss Anspruch 1 der Formel I, worin Alkyl in den Definitionen von $R_2$ bis $R_4$ und $R_6$ bis $R_9$ 1 bis 4 C-Atome enhält.

3. 1:1-Nickelkomplexe von Azinen gemäss Anspruch 1 der Formel I, worin Halogen in den Definitionen von $R_3$, $R_4$, $R_6$, $R_7$, $R_8$ und $R_9$ Chlor bedeutet.

4. 1:1-Nickelkomplexe von Azinen gemäss Anspruch 1 der Formel I, worin $R_1$ Cyano oder Wasserstoff, und $R_2$ Wasserstoff, Methyl, Aethyl oder eine Gruppe der Formel II bedeuten, worin n Null oder 1 ist, $R_3$ und $R_4$ unabhängig voneinander Wasserstoff, Chlor, Methyl oder -O-Methyl sind, und $R_5$ eine Gruppe der Formel II, worin n 1 ist und $R_3$ und $R_4$ die oben angegebene Bedeutung haben, oder eine Gruppe der Formel III bedeutet, worin $R_6$ und $R_7$ unabhängig voneinander Wasserstoff, Chlor, Methyl, Nitro, Trifluormethyl, $R_8O$-, $R_8CONH$-, $R_9NHCO$- oder $R_9NHSO_2$- bedeuten, wobei $R_8$ und $R_9$ Methyl oder Phenyl bedeuten, und $R_9$ zusätzlich Wasserstoff ist.

5. 1:1-Nickelkomplexe von Azinen gemäss Anspruch 1 der Formel I, worin $R_1$ Cyano oder Wasserstoff, und $R_2$ Wasserstoff, Methyl, Aethyl oder eine Gruppe der Formel II bedeuten, worin n Null oder 1 ist, $R_3$ und $R_4$ unabhängig voneinander Wasserstoff, Chlor, Methyl oder -O-Methyl sind, und $R_5$ eine Gruppe der Formel III bedeutet, worin $R_6$ und $R_7$ unabhängig voneinander Wasserstoff, Chlor, Methyl, Nitro, -O-Methyl, -O-Phenyl, Carbamoyl, Sulfamoyl, Acetylamino oder Benzoylamino bedeuten.

6. 1:1-Nickelkomplexe von Azinen gemäss Anspruch 1 der Formel I, worin $R_1$ Cyano oder Wasserstoff, $R_2$ Methyl, Wasserstoff oder eine Gruppe der Formel II bedeuten, worin n Null oder 1 ist, $R_3$ und $R_4$ unabhängig voneinander Wasserstoff, Chlor, Methyl oder -O-Methyl sind, und $R_5$ eine Gruppe der Formel III bedeutet, worin $R_6$ Wasserstoff oder Chlor, und

$R_7$ Chlor, Methyl, -O-Methyl, Nitro oder Sulfamoyl bedeuten.

7. 1:1-Nickelkomplexe von Azinen gemäss Anspruch 1 der Formel I, worin $R_1$ Cyano oder Wasserstoff, $R_2$ Wasserstoff oder Methyl, und $R_5$ eine Gruppe der Formel III bedeuten, worin $R_6$ Wasserstoff und $R_7$ Chlor oder -O-Methyl bedeuten.

8. 1:1-Nickelkomplexe von Azinen gemäss Anspruch 1 der Formel I, worin $R_1$ Cyano, $R_2$ Wasserstoff oder Methyl, und $R_5$ eine Gruppe der Formel III bedeuten, worin $R_6$ Wasserstoff und $R_7$ Chlor oder -O-Methyl bedeuten.

9. 1:1-Nickelkomplexe von Azinen gemäss Anspruch 1 der Formel I, worin $R_1$ Cyano, $R_2$ Methyl und $R_5$ eine Gruppe der Formel III bedeuten, worin $R_6$ Wasserstoff und $R_7$ Chlor bedeuten.

10. Verfahren zur Herstellung von 1:1-Nickelkomplexen von Azinen der Formel I gemäss Anspruch 1, dadurch gekennzeichnet, dass man ein Hydrazono-isoindolin der Formel IV

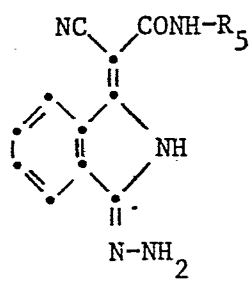

(IV)

worin $R_5$ die oben angegebene Bedeutung hat, mit einem Aldehyd der Formel V

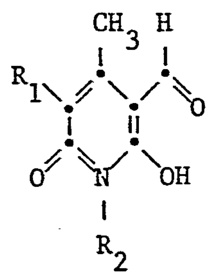

(V)

oder einem Aldimin der Formel VI

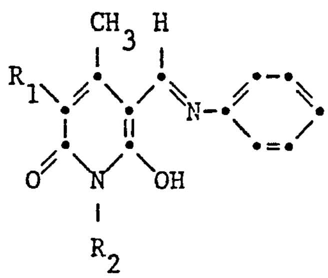

(VI)

worin $R_1$ und $R_2$ die oben angegebenen Bedeutungen haben, kondensiert und während oder nach der Kondensation ein nickelabgebendes Mittel zusetzt.

11. Verwendung von 1:1-Nickelkomplexen von Azinen der Formel I gemäss Anspruch 1 zum Pigmentieren von hochmolekularem organischem Material.

12. Hochmolekulares organisches Material enthaltend einen 1:1-Nickelkomplex eines Azins der Formel I gemäss Anspruch 1.

Europäisches Patentamt

**EUROPÄISCHER RECHERCHENBERICHT**

**0074924**
Nummer der Anmeldung

EP 82 81 0371

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 504 321 (CIBA-GEIGY) * Seite 2, Formeln 2,3; Seite 5, Formel 8; Seite 15, Formel links unten; Beispiel 71 * | 1-12 | C 09 B 57/04<br>C 09 B 26/02<br>C 07 D 401/12<br>C 08 K 5/34 |
| A | FR-A-2 243 235 (CIBA-GEIGY) * Beispiele 64-67, 231-238 * | 1 | |
| | | | RECHERCHIERTE SACHGEBIETE (Int. Cl. 3) |
| | | | C 09 B<br>C 07 D |

Der vorliegende Recherchenbericht wurde für alle Patentansprüche erstellt.

| Recherchenort | Abschlußdatum der Recherche | Prüfer |
|---|---|---|
| DEN HAAG | 14-12-1982 | DAUKSCH H.J. |

KATEGORIE DER GENANNTEN DOKUMENTEN
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument